# EUROPÄISCHE PATENTANMELDUNG

(11) **EP 1 126 297 A1**
(43) Veröffentlichungstag der Anmeldung: **22.08.2001**
(21) Anmeldenummer: 01440026.1
(22) Anmeldetag: 05.02.2001
(51) Int. Cl.: G02B 6/44

(54) **Optisches Flachkabel**

(30) Priorität: 18.02.2000 DE 10007366
(71) Anmelder: ALCATEL, 75008 Paris (FR)
(72) Erfinder: Ludl, Anton, 71691 Freiberg (DE); Nothofer, Klaus, 40699 Erkrath (DE)
(74) Vertreter: Rausch, Gabriele, Dr.

(57) **Zusammenfassung**

Es wird ein optisches Flachkabel mit zwei Lichtwellenleiterelementen sowie zumindest zwei Zug-/Stauchelementen beschrieben, wobei die Lichtwellenleiterelemente und die Zug-/Stauchelemente in einer gemeinsamen Umhüllung angeordnet sind. Die Lichtwellenleiterelemente (1,2) sind voneinander beabstandet in der Umhüllung (3) angeordnet und zumindest je ein Zug-/Stauchelement (5,6) ist parallel und in unmittelbarer Nachbarschaft zu jedem Lichtwellenleiterelement (1,2) verlaufend angeordnet.

## Beschreibung

Die Erfindung betrifft ein optisches Flachkabel nach dem Oberbegriff des Anspruchs 1.

Für den Anschluß neuer Teilnehmer an das Teilnehmernetz werden sogenannte Teilnehmeranschlußkabel eingesetzt. Derartige Teilnehmeranschlußkabel verbinden das Verteilerkabel (Ortskabel) mit einem Gebäude. Bei einem Glasfasernetz weisen die Teilnehmeranschlußkabel nur wenige optische Fasern aus.

Aus "Journal of Lightware Technology" Vol. 16, No. 2, Febr. 1998, Seite 209 ist ein optisches Flachkabel bekannt, welches einen mittig in einer Kunststoffumhüllung angeordneten Lichtwellenleiter und zwei im Abstand zum Lichtwellenleiter ebenfalls in der Umhüllung angeordnete Zug-/Stauchelemente aufweist. Eine solche Konstruktion ist vorgesehen als Innenkabel, Unterflurkabel oder Geräteanschlußkabel.

Aus "Journal of Lightware Technology" Vol. LT-5, No. 6, June 1987, Seite 815 ist ein optisches Flachkabel mit zwei mittig in einer Kunststoffumhüllung verlaufenden Lichtwellenleitern bekannt. In der Umhüllung sind ebenfalls zwei Zug-/Stauchelemente im Abstand zu den Lichtwellenleitern angeordnet.

Dieses Kabel soll als Drop cable, Innenkabel bzw. Unterflurkabel verwendet werden.

Der vorliegenden Erfindung liegt die Aufgabe zugrunde, ein optisches Flachkabel bereitzustellen, welches leicht, kostengünstig herstellbar, einfach montierbar ist, geringe Abmessungen aufweist und deshalb optisch unauffällig ist und bei welchem die Lichtwellenleiterelemente leicht zugänglich sind.

Diese Aufgabe wird durch die im Kennzeichen des Anspruchs 1 erfaßten Merkmale gelöst.

Neben den sich aus der Aufgabenstellung direkt ergebenden Vorteilen, weist das erfindungsgemäße Kabel noch den Vorteil auf, daß Zug- und Querkräfte vom Lichtwellenleiter ferngehalten werden. Durch die Anordnung der Zug-/Stauchelemente in unmittelbarer Nachbarschaft zu den Lichtwellenleiterelementen können die Zug-/Stauchelemente als Reißfaden zur leichteren Montage der Lichtwellenleiter verwendet werden.

Durch die Anordnung der Lichtwellenleiter im Abstand zueinander kann das Kabel leicht an Wänden befestigt werden, ohne daß eine Beschädigung der Lichtwellenleiter befürchtet werden muß. Durch die Anordnung der Zug-/Stauchelemente werden bei Innenraumverlegung notwendige Biegungen nicht erschwert.

Die Lichtwellenleiter können aus optischen Glasfasern aber auch aus optischen Kunststoffasern bestehen. Wegen der relativ kurzen Entfernungen im Teilnehmerendbereich fällt die höhere Dämpfung der optischen Kunststoffasern nicht sehr ins Gewicht.

Weitere vorteilhafte Ausgestaltungen der Erfindung sind in den Unteransprüchen erfaßt.

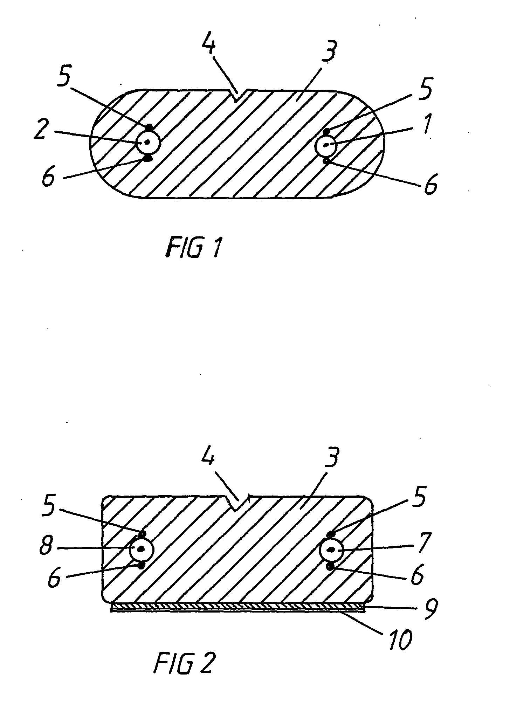

Die Erfindung ist anhand der in den Figuren 1 und 2 schematisch dargestellten Ausführungsbeispielen näher erläutert.

In der Figur 1 ist ein Kabel nach der Lehre der Erfindung dargestellt, welches bevorzugt als Außenkabel Verwendung findet.

Das Kabel besteht aus zwei Volladern 1 und 2, die in Abstand zueinander in einer gemeinsamen Umhüllung 3 angeordnet sind. Das Kabel ist flach ausgebildet und kann mit der flachen Seite z. B. an einer Gebäudewand befestigt werden. Eine Kerbe 4 an der der flachen Seite gegenüberliegenden Seite dient sowohl als Identifikationshilfe für die Faser als auch als Montagehilfe, wenn das Kabel z. B. mit Nägeln an der Gebäudewand befestigt werden soll.

Die Umhüllung 3 besteht bei Außenkabeln vorzugsweise aus UV-beständigem Polyethylen.

In direkter Nachbarschaft zu den Volladern 1 und 2 sind diametral zwei Zug- und Stauchelemente 5 und 6 vorgesehen, die vorzugsweise über die gesamte Länge der Volladern 1 und 2 in direktem Kontakt mit den Volladern 1 und 2 stehen.

Die Zug- und Stauchelemente 5 und 6 können Stahldrähte aber auch Stäbe aus glasfaserverstärktem Kunststoff sein.

Die Zug- und Stauchelemente 5 und 6 dienen auch als sogenannte Reißfäden, mit deren Hilfe die Umhüllung 3 aufgerissen werden kann, so daß die Volladern 1 und 2 zugänglich werden und montiert werden können.

Das in Figur 2 dargestellte Kabel wird vornehmlich als Innenkabel verwendet.

Hier bestehen die Lichtwellenleiterelemente aus den Hohl- oder Bündeladern 7 und 8, die in der Umhüllung 3 angeordnet sind.

Die Umhüllung 3 besteht bei einem Innenkabel vorzugsweise aus brandsicherem Polyvinylchlorid, um im Brandfall eine Ausbreitung der Flammen zu verhindern. Aber auch andere brandsichere Werkstoffe wie Polyethylen mit Zusätzen von Aluminiumtrioxyhydrat (ATH) können eingesetzt werden.

Als Montagehilfe dient hier ebenfalls eine Kerbe 4. An der der Kerbe 4 gegenüberliegenden Fläche ist eine Schicht 9 aus einem Kleber vorgesehen, mit dessen Hilfe das Kabel an eine Gebäudewand angeklebt werden kann. Vor der Verlegung des Kabels ist eine abziehbare Schutzfolie 10 auf der Kleberschicht 9 angeordnet.

Das Kabel gemäß der Lehre der Erfindung weist eine Breite von 5 - 8 mm und eine Höhe von 3 - 4 mm auf. Es ist deshalb unauffällig nach der Verlegung.

## Patentansprüche

1. Optisches Flachkabel mit zwei Lichtwellenleiterelementen sowie zumindest zwei Zug-/Stauchelementen, wobei die Lichtwellenleiterelemente und die Zug-/Stauchelemente in einer gemeinsamen Umhüllung angeordnet sind, **dadurch gekennzeichnet,** daß die Lichtwellenleiterelemente (1,2,7,8) voneinander beabstandet in der Umhüllung (3) angeordnet sind und zumindest je ein Zug-/Stauchelement (5,6) parallel und in unmittelbarer Nachbarschaft zu jedem Lichtwellenleiterelement (1,2,7,8) verlaufend angeordnet ist.

2. Optisches Flachkabel nach Anspruch 1, **dadurch gekennzeichnet,** daß zu jedem Lichtwellenleiterelement (1,2.7,8) zwei Zug-/Stauchelemente (5,6) zugehörig sind, die diametral zueinander und in Kontakt mit dem Lichtwellenleiterelement (1,2,7,8) angeordnet sind.

3. Optisches Flachkabel nach Anspruch 1 oder 2, **dadurch gekennzeichnet,** daß das Lichtwellenleiterelement eine Vollader (1,2) ist.

4. Optisches Flachkabel nach Anspruch 1 oder 2, **dadurch gekennzeichnet,** daß das Lichtwellenleiterelement eine Hohl- oder Bündelader (7,8) ist.

5. Optisches Flachkabel nach einem der Ansprüche 1 bis 4, **dadurch gekennzeichnet,** daß die Zug-/Stauchelemente (5,6) aus einem Stahldraht oder einer Stahldrahtlitze bestehen.

6. Optisches Flachkabel nach einem der Ansprüche 1 bis 4, **dadurch gekennzeichnet,** daß die Zug-/Stauchelemente (5,6) aus einem Kunststoff bestehen.

7. Optisches Flachkabel nach Anspruch 6, **dadurch gekennzeichnet,** daß die Zug-/Stauchelemente (5,6) aus faserverstärktem Kunststoff z. B. glasfaserverstärktem Polyester bestehen.

8. Optisches Flachkabel nach einem der Ansprüche 1 bis 7, **dadurch gekennzeichnet,** daß die Umhüllung (3) aus Polyethylen besteht.

9. Optisches Flachkabel nach einem der Ansprüche 1 bis 7, **dadurch gekennzeichnet,** daß die Umhüllung (3) aus Polyvinylchlorid besteht.

10. Optisches Flachkabel nach einem der Ansprüche 1 bis 9, **dadurch gekennzeichnet,** daß die Umhüllung (3) aus einem halogenfreien, brandsicheren Kunststoff besteht.

11. Optisches Flachkabel nach einem der Ansprüche 1 bis 10, **dadurch gekennzeichnet,** daß zumindest eine der großen Flächen des Kabels eben ausgebildet ist und einen Klebefilm (9) mit einer Schutzfolie (10) aufweist.

12. Optisches Flachkabel nach einem der Ansprüche 1 bis 11, **dadurch gekennzeichnet,** daß in mindestens einer der großen Flächen der Umhüllung (3) eine Kerbe (4) vorgesehen ist.
